# EUROPEAN PATENT SPECIFICATION

(11) **EP 1 479 571 B1**
(45) Date of publication and mention of the grant of the patent: **08.11.2006**
(21) Application number: 04011737.6
(22) Date of filing: 18.05.2004
(51) Int. Cl.: B60R 21/20, B60R 21/16

(54) **Occupant leg protection apparatus**
Beinschützer für einen Fahrzeuginsassen
Dispositif de protection des jambes d'un occupant

(30) Priority: 19.05.2003 JP 2003140632
(43) Date of publication of application: 24.11.2004
(73) Proprietor: TAKATA CORPORATION, Minato-ku, Tokyo 106-8510 (JP)
(72) Inventor: Kumagai, Masayoshi, Minato-ku Tokyo 106-8510 (JP)
(74) Representative: Banzer, Hans-Jörg

(56) References cited:
- EP-A- 0 621 159
- EP-A- 0 684 164
- WO-A-03/095272
- DE-A- 10 147 769
- US-A1- 2002 121 770
- US-B1- 6 170 871

## Description

The present invention relates to an occupant leg protection apparatus for protecting leg portions of an occupant in the event that a vehicle such as an automobile encounters a collision.

As an occupant leg protection apparatus for protecting leg portions of an occupant in the event that a high-speed vehicle such as an automobile encounters a collision, there is an occupant leg protection apparatus mainly comprising a retainer disposed in front of a vehicle seat, an airbag accommodated in the retainer, a gas generator for inflating the airbag, and a lid which covers the retainer in normal state (when the high-speed vehicle such as an automobile does not encounter a collision).

There is also such an occupant leg protection apparatus in which the lid is forced by the airbag to move in parallel toward the vehicle seat, whereby the leg portions of the occupant are received by the lid (Japanese Patent Unexamined Publication No. H08-40177).

In the occupant leg protection apparatus of the aforementioned publication, the airbag is accommodated in the retainer in the state that the airbag is folded and is connected at its one end side to the retainer. The lid is arranged to have a surface which is flush with an interior panel in front of the vehicle seat. The lid is attached to the retainer by a fastening member. When the lid is pressed by the airbag, the attachment by the fastening member is cancelled so that the lid moves toward the vehicle seat.

The airbag is secured to the back of the lid. To limit the moving distance of the lid, the retainer and the lid are connected to each other by tethers. The tethers are disposed inside the airbag such that one ends of the tethers are connected to the retainer and the other ends are connected to the lid.

As the airbag is inflated, the lid is forced by the airbag so as to move forward. The lid moves until the tethers are tightened. During the lid receives the leg portions of the occupant, impact generated due to the collision of the leg portions against the lid is absorbed by the airbag because the lid is supported by the airbag.

DE 101 47 769 A1, which serves as a basis for the preamble of claim 1, discloses a knee protection device comprising a tubular airbag which is connected to a cover disposed below an instrument panel portion of a vehicle, and which, in the non-inflated state, is hidden behind the cover. Upon actuation of the knee protection device, the airbag is inflated, thus pushing the cover toward an occupant.

US 6,170,871 B1 discloses an inflatable trim panel assembly which includes a support member, an elastic skin attached to the periphery of the support member, and tethers secured between the elastic skin and the support member. In use, an inflator supplies gas to the sealed area between the elastic skin and the support member.

In the aforementioned occupant leg protection apparatus of Japanese Patent Unexamined Publication No. H08-40177, the leg portions of the occupant collide with the lid so that the airbag behind the lid absorbs the impact. However, since the lid has certain degree of rigidity, stress must be concentrated at a portion of the legs of the occupant where collides with the lid.

It is an object of the present invention to provide an occupant leg protection apparatus which enables to significantly reduce stress locally produced on leg portions of an occupant.

According to the present invention this object is achieved by an occupant leg protection apparatus as defined in claim 1. The dependent claims define preferred and advantageous embodiments of the invention.

An occupant leg protection apparatus of the present invention is an occupant leg protection apparatus comprising an instrument panel, an airbag arranged in front of a vehicle seat and a gas generator for inflating the airbag and is characterized in that the instrument panel in front of the vehicle seat has an outer layer which is movable toward an occupant and a base member behind the outer layer and that said airbag is disposed between the outer layer and the base member so that the outer layer is forced by the airbag so as to move toward the occupant when the airbag is inflated. A front panel and a rear panel of the airbag are partially connected together at an internal position by a seam.

In the occupant leg protection apparatus, as the gas generator is actuated according to a vehicle frontal collision, the airbag arranged between the outer layer and the base member of the instrument panel is inflated so that the outer layer moves toward the occupant.

Since the outer layer is flexible as compared to a typical instrument panel, even when a portion of the legs of the occupant collides with the outer layer, stress generated at the portion where collides with the outer layer is small.

In the present invention, it is preferable that the outer layer is connected to the airbag and the outer layer is so flexible to curve around an occupant-facing surface of the airbag when the airbag is inflated.

The outer layer is enough flexible so that stress generated at a portion of legs of the occupant which collides with the outer layer is enough small.

In the present invention, the apparatus may be provided with a limiting means for limiting the bulging amount of the airbag toward the occupant. Therefore, the airbag is prevented from partially projecting toward the occupant when the airbag is inflated. Even when the positions of leg portions of the occupant vary widely according to the posture of the occupant, the leg portions can be securely protected.

In the present invention, the outer layer may be designed to be divided into a plurality of pieces when the airbag is inflated. According to the structure, the airbag can be deployed widely in the vertical and lateral directions when the airbag is inflated.

In the present invention, the base member may be provided with a concavity (or concavities) formed in the front surface thereof so that the airbag is partially accommodated in the concavity. According to this structure, the size of the airbag when inflated can be increased.

In the present invention, the outer layer may be designed to separate from the base member when the airbag is inflated. In this case, the airbag may be designed to bulge out at least to protrude upwardly from the upper edge of the outer layer when the airbag is inflated. According to this structure, even when a leg portion of the occupant is located at a position above the outer layer, the leg portion can be received by the airbag.

An occupant leg protection apparatus which is, however, not an embodiment of the present invention is an occupant leg protection apparatus comprising an inflatable portion arranged in front of a vehicle seat and a gas generator for inflating the inflatable portion and is characterized in that the instrument panel in front of the vehicle seat has an outer layer which is able to bulge out and a base member behind the outer layer and that the outer layer bulges out toward the occupant when gas is supplied to the back of the outer layer from the gas generator.

In the occupant leg protection apparatus having the aforementioned structure, as the gas generator is actuated according to a vehicle frontal collision, gas is supplied between the outer layer and the base member of the instrument panel, whereby the outer layer bulges out toward the occupant.

Since the outer layer is flexible as compared to a typical instrument panel, even when a portion of the legs of the occupant collides with the outer layer, stress generated at the portion where collides with the outer layer is small.
Figs. 1(a), 1(b) are illustrations of an occupant leg protection apparatus according to an embodiment of the present invention.
Fig. 2 is a vertical sectional view showing the occupant leg protection apparatus of Fig. 1 in a state that an airbag is inflated.
Fig. 3 is a vertical sectional view of an occupant leg protection apparatus according to an example which is not an embodiment of the present invention when an outer layer of an instrument panel bulges out.
Fig. 4 is a vertical sectional view of an occupant leg protection apparatus according to still another embodiment of the present invention.
Fig. 5 is a vertical sectional view showing the occupant leg protection apparatus of Fig. 4 in a state that an airbag is inflated.
Fig. 6 is a vertical sectional view of an occupant leg protection apparatus according to another embodiment of the present invention.
Fig. 7 is a vertical sectional view showing the occupant leg protection apparatus of Fig. 6 in a state that an airbag is inflated.
Fig. 8 is a vertical sectional view showing an occupant leg protection apparatus according to an example which is not an embodiment of the present invention.
Fig. 9 is a vertical sectional view showing the occupant leg protection apparatus of Fig. 8 in a state that an airbag is inflated.
Fig. 10 is a vertical sectional view of an occupant leg protection apparatus according to an example which is not an embodiment of the present invention.

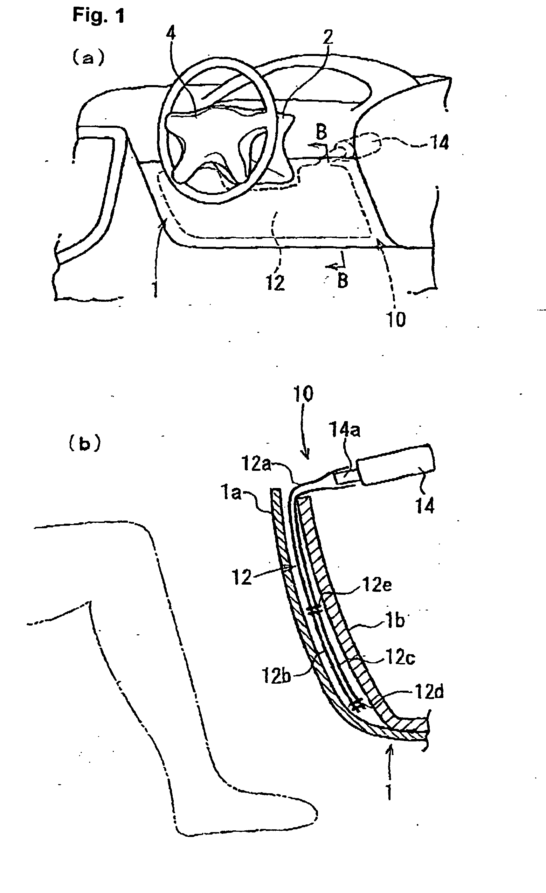

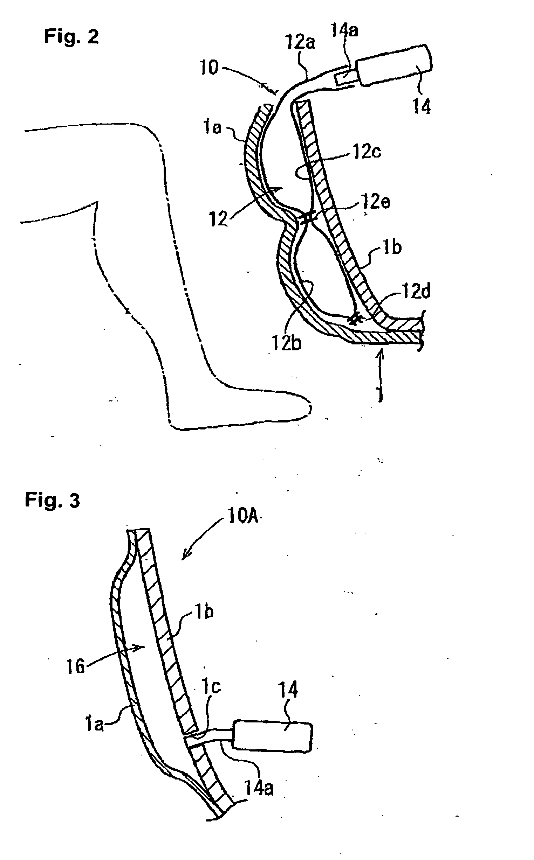

Hereinafter, embodiments of the present invention will be described with reference to the attached drawings. Fig. 1 (a) is a perspective view of a portion in front of a driver' s seat of an automobile provided with an occupant leg protection apparatus 10 according to an embodiment of the present invention, Fig. 1(b) is a sectional view taken along a line B-B of Fig. 1(a), and Fig. 2 is a sectional view (vertical sectional view) similar to Fig. 1(b) and showing a state that an airbag is inflated.

A steering column (not shown) is provided to project from an instrument panel 1 in front of a driver's seat (not shown) of an automobile. The steering column is covered by a steering column cover 2. A steering wheel 4 is fixed to the end of a steering shaft projecting from the steering column.

The instrument panel 1 has an outer layer 1a facing a vehicle cabin and a base member 1b behind the outer layer 1a. In the instrument panel 1, an airbag 12 of an occupant leg protection apparatus 10 is arranged between the outer layer 1a and the base member 1b in an area facing leg portions (lower leg portions under knees) of an occupant sitting in the driver's seat. The base member 1b is a rigid member forming the skeleton of the instrument panel 1. On the other hand, the outer layer 1a is a flexible member which can curve around a surface of the airbag 12 facing the occupant and can extend in the plane direction.

The occupant leg protection apparatus 10 comprises the airbag 12, a gas generator 14 for inflating the airbag 12, and a control circuit (not shown) for actuating the gas generator 14 to spout out gas in the event of an emergency such as a vehicle frontal collision. In the normal state not emergency situation, the airbag 12 is disposed between the outer layer 1a and the base member 1b in the state that the airbag 12 is folded into a flat shape as shown in Fig. 1(b) . The airbag 12 has a gas introducing portion 12a like a hose extending from the airbag 12 to the back of the base member 1b, into which a gas exhaust nozzle 14a of the gas generator 14 is inserted. A hose clamp (not shown) is used to tighten the gas introducing portion 12a to the gas exhaust nozzle 14a.

Though the gas introducing portion 12a extends from an upper edge portion on one side in the lateral direction of the airbag 12 (the vehicle width direction) in this embodiment, the location of the gas introducing portion 12a is not limited thereto. A plurality of gas introducing portions 12a may be provided at a plurality of locations of the airbag 12. The gas generator 14 may be arranged at another location besides the illustrated location. The gas generator 14 and the gas introducing portion 12a may be connected to each other via a pipe, but not shown. In this case, the pipe may be arranged to supply gas from a single gas generator 14 to a plurality of gas introducing portions 12a.

In this embodiment, the outer shell of the airbag 12 is composed of a front panel 12b forming an occupant-facing surface and a rear panel 12c forming a surface opposite to the occupant-facing surface. The front panel 12b and the rear panel 12c are connected to each other around their peripheries by means of sewing or the like so as to form an envelope shape. Numeral 12d designates a seam made of sewing thread(s) connecting the peripheries.

The front panel 12b and the rear panel 12c are partially connected together also at an inner position than the peripheries thereof. Numeral 12e designates a seam for this connection. Since the front panel 12b and the rear panel 12c are partially connected together at the inner position than the peripheries thereof, the outer layer 1a is pushed out substantially uniformly over the entire occupant leg-facing area toward the occupant.

Though the front panel 12b of the airbag 12 and the outer layer 1a of the instrument panel 1 are illustrated as separated from each other and the rear panel 12c and the base member 1b are illustrated as separated from each other in Fig. 1(b) and Fig. 2 for the purpose of clearing up the relation of the respective components, the front panel 12b and the outer layer 1a are in close contact with each other and the rear panel 12c and the base member 1b are in close contact with each other.

When the automobile provided with the occupant leg protection apparatus 10 encounters an emergency situation such as a frontal collision, the gas generator 14 spouts out gas so that the airbag 12 is inflated with gas from the gas generator 14. According to the inflation of the airbag 12, the outer layer 1a moves toward the occupant in an area of the instrument panel 1 facing leg portions of the occupant. When the leg portions of the occupant move forward, a portion of the legs collide with the outer layer 1a, the airbag 12 receives the leg portions of the occupant via the outer layer 1a, thereby absorbing impact.

In the occupant leg protection apparatus 10, since the outer layer 1a is so flexible to curve around the occupant leg-facing surface of the airbag 12 during the inflation of the airbag 12, stress generated at a portion of the legs of the occupant which collides with the outer layer 1a is enough small.

Since the front panel 12b and the rear panel 12c of the airbag 12 are partially connected together at the inner position than the peripheries thereof in this embodiment, the outer layer 1a is pushed out substantially uniformly over the entire occupant leg-facing area toward the occupant. Therefore, even when the positions of leg portions of the occupant vary widely according to the posture of the occupant, the leg portions can be securely protected.

In the above embodiment, the airbag 12 is arranged between the outer layer 1a and the base member 1b of the instrument panel 1 and the outer layer 1a is pushed out by the airbag to move toward the occupant according to the inflation of the airbag 12. However, the occupant leg protection apparatus may have such a structure that the outer layer 1a is designed to be able to bulge out toward the occupant so that the outer layer 1a bulges out (moves) toward the occupant when gas is supplied between the outer layer 1a and the base member 1b, just as an occupant leg protection apparatus 10A shown in Fig. 3. Fig. 3 is a vertical sectional view showing the occupant leg protection apparatus 10A which is not an embodiment of the invention, having such a structure in a state that an outer layer of an instrument panel bulges out.

In the occupant leg protection apparatus 10A shown in Fig. 3, the outer layer 1a is designed to be able to bulge out toward an occupant sitting in a driver's seat in an area of an instrument panel facing leg portions of the occupant. The peripheral edge of an occupant leg-facing area of the outer layer 1a is air-tightly connected to a base member 1b all around the occupant leg-facing area so as to form a chamber 16 defined by the outer layer 1a and the base member 1b. The base member 1b is provided with an opening 1c communicating with the chamber 16. A gas exhaust nozzle 14a of a gas generator 14 is connected to the opening 1c. In the normal state, no gas is introduced into the chamber 16 so that the outer layer 1a and the base member 1b are in close contact with each other.

In also this apparatus, the base member 1b is a rigid member forming the skeleton of the instrument panel 1. On the other hand, the outer layer 1a is a flexible member which can flexibly curve and extend in the plane direction to bulge out toward the occupant by the pressure of gas.

The other structure of the occupant leg protection apparatus 10A is the same as that of the occupant leg protection apparatus 10 shown in Figs. 1(a), 1(b) and Fig. 2. The same numerals used in Fig. 3 designate the same parts as those in Figs. 1(a), 1(b) and Fig. 2.

In the occupant leg protection apparatus 10A having the aforementioned structure, in the event of an emergency such as a vehicle frontal collision, the gas generator 14 is actuated to spout out gas so that the gas is supplied to the chamber 16, whereby the outer layer 1a bulges out toward the occupant in an area of the instrument panel 1 facing the leg portions of the occupant. When the leg portions of the occupant move forward, the leg portions collide with the outer layer 1a and the leg portions of the occupant are received by gas pressure inside the chamber 16, thereby absorbing impact.

Also in the occupant leg protection apparatus 10A, since the outer layer 1a is enough flexible, stress generated at a portion of the legs of the occupant which collides with the outer layer 1a is enough small.

Since the airbag for moving the outer layer 1a toward the occupant is not required, the occupant leg protection apparatus 10A can have simple structure.

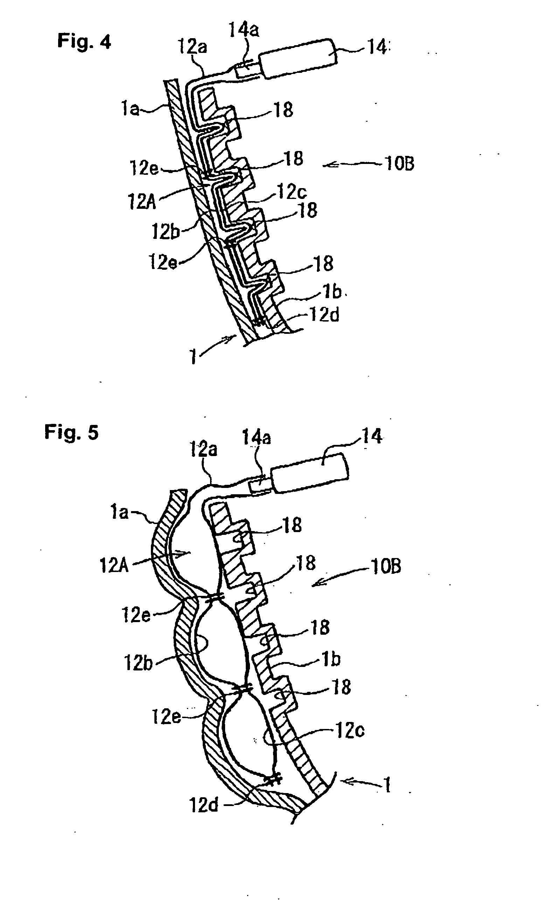

Fig. 4 is a vertical sectional view showing an occupant leg protection apparatus 10B according to another embodiment of the present invention in a state that an airbag is not inflated and Fig. 5 is a vertical sectional view showing the occupant leg protection apparatus 10B in a state that the airbag is inflated.

In this occupant leg protection apparatus 10B, similar to the occupant leg protection apparatus 10 shown in Figs. 1(a), 1(b) and Fig. 2, an airbag 12A is arranged between an outer layer 1a and a base member 1b in an occupant leg-facing area of the instrument panel 1. A gas exhaust nozzle 14a of a gas generator 14 is connected to a gas introducing portion 12a extending from the airbag 12A to the back of the base member 1b. In this embodiment, the airbag 12A is designed to be able to expand in a wider area than the occupant leg-facing area in the normal state of the outer layer 1a in the vertical direction and the lateral direction.

The base member on which the airbag 12A is arranged is provided with concavities 18 which are formed in the front surface of the base member 1b at intervals in the vertical direction and the lateral direction such that the airbag 12A is partially placed in the concavities 18. The airbag 12A is folded into a flat shape along the entire surface of the base member 1b and is folded at portions corresponding to the respective concavities so as to form pleats which are placed in the respective concavities 18. In this manner, the airbag becomes a folded state not protruding from the outer layer 1a.

The outer layer 1a is a flexible member which can curve around the occupant-facing surface of the airbag 12A when the airbag 12A is inflated and can extend in the plane direction according to the deployment of the airbag 12A in the vertical direction and the lateral direction.

Similar to Figs. 1(a), 1(b) and Fig. 2, though the front panel 12b of the airbag 12A and the outer layer 1a of the instrument panel 1 are illustrated as separated from each other and the rear panel 12c of the airbag 12A and the base member 1b of the instrument panel 1 are illustrated as separated from each other in Figs. 4 and 5 for the purpose of clearing up the relation of the respective components, the front panel 12b and the outer layer 1a are in close contact with each other and the rear panel 12c and the base member 1b are in close contact with each other.

The other structure of the occupant leg protection apparatus 10B is the same as that of the occupant leg protection apparatus 10 shown in Figs. 1(a), 1(b) and Fig. 2. The same numerals used in Figs. 4 and 5 designate the same parts as those in Figs. 1(a), 1(b) and Fig. 2.

Also in the occupant leg protection apparatus 10B having the aforementioned structure, in the event of an emergency such as a vehicle frontal collision, the gas generator 14 is actuated to spout out gas so that the gas is supplied to the inside of the airbag 12A, whereby the airbag 12A is inflated and the outer layer 1a thus bulges out toward the occupant. When the leg portions of the occupant move forward, the leg portions collide with the outer layer 1a and the airbag 12A receives the leg portions via the outer layer 1a, thereby absorbing impact. Since the outer layer 1a is enough flexible, stress generated at a portion of the legs of the occupant which collides with the outer layer 1a is enough small.

In the occupant leg protection apparatus 10B, the airbag 12A is deployed into a wider area in the vertical direction and the lateral direction.

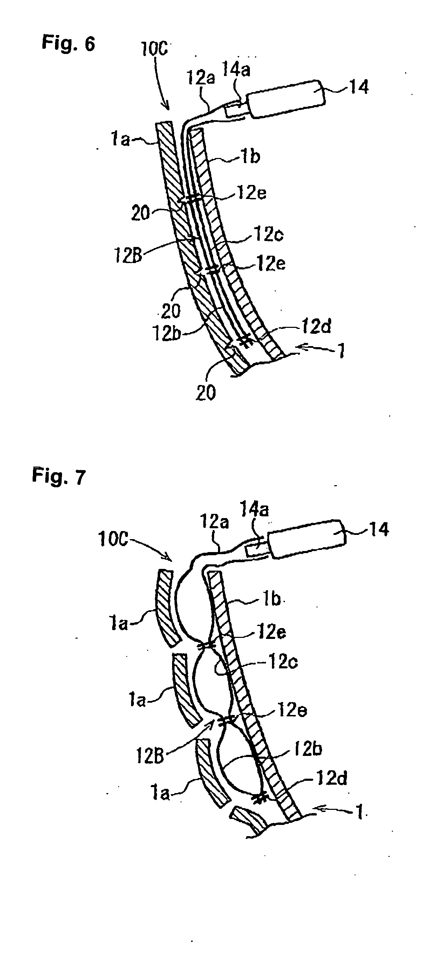

Fig. 6 is a vertical sectional view showing an occupant leg protection apparatus 10C according to still another embodiment of the present invention in a state that an airbag is not inflated and Fig. 7 is a vertical sectional view showing the occupant leg protection apparatus 10C in a state that the airbag is inflated.

In this occupant leg protection apparatus 10C, similar to the occupant leg protection apparatus 10 shown in Figs. 1(a), 1(b) and Fig. 2, an airbag 12B is arranged between an outer layer 1a and a base member 1b in an occupant leg-facing area of the instrument panel 1. A gas exhaust nozzle 14a of a gas generator 14 is connected to a gas introducing portion 12a extending from the airbag 12B to the back of the base member 1b. In this embodiment, the airbag 12B is designed not to protrude from the occupant leg-facing area of the outer layer 1a in a state that the airbag 12B is folded flatly. As the airbag is inflated, a front panel 12b and a rear panel 12c composing the outer shell of the airbag expand in the vertical direction and the lateral direction so as to expand into a wider area than the occupant leg-facing area of the outer layer 1a.

Similar to Figs. 1(a), 1(b) and Fig. 2, though the front panel 12b and the outer layer 1a are illustrated as separated from each other in Figs. 6 and 7 for the purpose of clearing up the relation of the respective components, the front panel 12b and the outer layer 1a are connected to each other by a connecting means such as adhesive bonding. Though the rear panel 2c and the base member 1b are illustrated as separated from each other, they are in close contact with each other.

In this embodiment, the outer layer 1a is a flexible member which can curve around the occupant-facing surface of the airbag 12B when the airbag 12B is inflated, with little or no expansion in the plane direction. The outer layer 1a is provided with a plurality of tear lines 20 spaced apart from each other in the vertical direction and the lateral direction. The tear lines 20 are formed to extend in the lateral direction and the vertical direction and intersect with each other. When the airbag 12B is inflated, the outer layer 1a is divided along the tear lines 20 into a plurality of pieces according to the expansion of the front panel 12b in the vertical direction and the lateral direction, thereby allowing the expansion of the front panel 12b.

The other structure of the occupant leg protection apparatus 10C is the same as that of the occupant leg protection apparatus 10 shown in Figs. 1(a), 1(b) and Fig. 2. The same numerals used in Figs. 6 and 7 designate the same parts as those in Figs. 1(a), 1(b) and Fig. 2.

In the occupant leg protection apparatus 10C having the aforementioned structure, in the event of an emergency such as a vehicle frontal collision, the gas generator 14 is actuated to spout out gas so that the gas is supplied to the inside of the airbag 12B, whereby the airbag 12B is inflated and the outer layer 1a thus bulges out toward the occupant. During this, the outer layer 1a is divided along the tear lines 20 according to the inflation of the airbag 12B so that the airbag 12B expands widely in the vertical direction and the lateral direction. Also in this occupant leg protection apparatus 10C, since the outer layer 1a is enough flexible, stress generated at a portion of the legs of the occupant which collides with the outer layer 1a is enough small.

In the occupant leg protection apparatus 10C, since the outer layer 1a can be divided into a plurality of pieces, the airbag 12B is deployed into a wider area in the vertical direction and the lateral direction.

Since the outer layer 1a is designed to be divided into a plurality of pieces, material having poor tensibility in the plane direction is allowed to be employed as the material forming the outer layer 1a, thereby improving the degree of freedom of material selection.

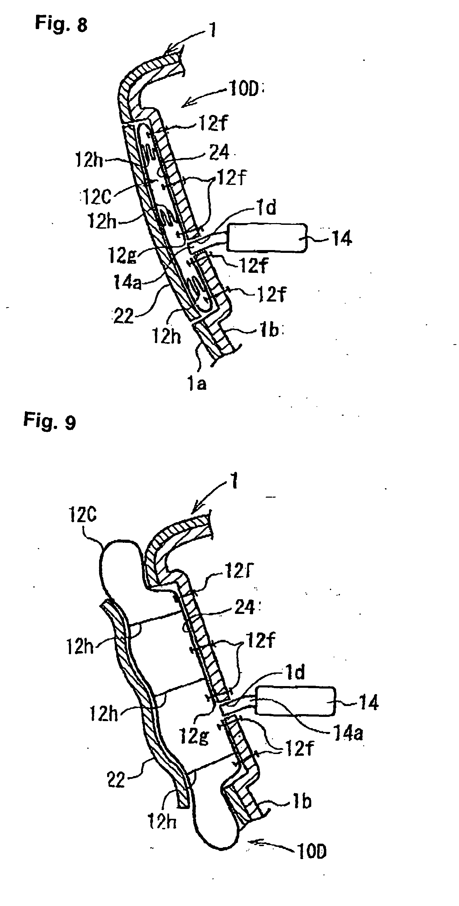

Fig. 8 is a vertical sectional view showing an occupant leg protection apparatus 10D according to an example which is not an embodiment in a state that an airbag is not inflated and Fig. 9 is a vertical sectional view showing the occupant leg protection apparatus 10D in a state that the airbag is inflated.

In this apparatus, an occupant leg-facing portion 22 of an outer layer 1a of an instrument panel 1 is allowed to be separated from the other portion around the occupant leg-facing portion 22. A base member 1b behind the outer layer 1a is provided with an airbag housing portion 24 at an area corresponding to the occupant leg-facing portion 22. The airbag housing portion 24 is composed of a convexity pitted in a front surface of the base member 1b. An airbag 12C of the occupant leg protection apparatus 10D is accommodated in the airbag housing portion 24 in a state that the airbag 12C is folded flatly. In this apparatus, the airbag 12C can be deployed into a wider area than the occupant leg-facing portion 22 in the vertical direction and the lateral direction. The occupant leg-facing portion 22 (the outer layer 1a) is a flexible member which can curve around the occupant-facing surface of the airbag 12C when the airbag 12C is inflated.

The occupant leg protection apparatus 10D comprises the airbag 12C and a gas generator 14 for inflating the airbag 12C. The rear surface of the airbag 12C is attached to the bottom of the airbag housing portion 24 by fastening members 12f such as rivets. The rear surface of the airbag 12C is provided with an opening 12g for introducing gas. The bottom of the airbag housing portion 24 is provided with an opening 1d communicating with the opening 12g. A gas exhaust nozzle 14a of the gas generator 14 is connected to the opening 1d.

In this apparatus, the airbag 12C is provided inside thereof with tethers (straps) 12h connecting the occupant leg-facing surface and the rear surface of the airbag 12C which are arranged at intervals in the vertical direction and the lateral direction. The tethers 12h limit the bulging amount of the occupant leg-facing surface toward the occupant when the airbag 12C is inflated, thereby preventing the airbag 12C from locally projecting.

Similar to Figs. 1(a), 1(b) and Fig. 2, though the occupant leg-facing surface of the airbag 12C and the occupant leg-facing portion 22 of the outer layer 1a are illustrated as separated from each other and the rear surface of the airbag 12C and the bottom of the airbag housing portion 24 are illustrated as separated from each other in Figs. 8 and 9 for the purpose of clearing up the relation of the respective components, the occupant leg-facing surface of the airbag 12C and the occupant leg-facing portion 22 are connected by adhesive bonding or the like and the rear surface of the airbag 12C and the bottom of the airbag housing portion 24 are in close contact with each other.

Though the occupant leg-facing portion 22 is formed as a separate member from the other portion of the outer layer 1a around the occupant leg-facing portion 22 in Figs. 8 and 9, they may be formed integrally. In this case, the occupant leg-facing portion 22 of the outer layer 1a is defined by tear lines or the like, whereby the occupant leg-facing portion 22 is separatable from the other portion of the outer layer 1a around it, but not shown.

The other structure of the occupant leg protection apparatus 10D is the same as that of the occupant leg protection apparatus 10 shown in Figs. 1(a), 1(b) and Fig. 2. The same numerals used in Figs. 8 and 9 designate the same parts as those in Figs. 1(a), 1(b) and Fig. 2.

In the occupant leg protection apparatus 10D having the aforementioned structure, in the event of an emergency such as a vehicle frontal collision, the gas generator 14 is actuated to spout out gas so that the gas is supplied to the inside of the airbag 12C, whereby the airbag 12C is inflated. According to the inflation of the airbag 12C, the occupant leg-facing portion 22 separates from the portion around it and moves toward the occupant. Then, the airbag 12C expands widely in the vertical direction and the lateral direction to protrude from the occupant leg-facing portion 22. Also in this occupant leg protection apparatus 10D, the occupant leg-facing portion 22 (the outer layer 1a) is enough flexible. Therefore, even when a portion of the legs of the occupant collides with the occupant leg-facing portion 22, stress generated at the portion where collides with the occupant leg-facing portion 22 is enough small.

In the occupant leg protection apparatus 10D, since the occupant leg-facing portion 22 of the outer layer 1a is separatable from the portion around the occupant leg-facing portion 22, the airbag 12C can be deployed into a wider area than the occupant leg-facing portion 22 in the vertical direction and the lateral direction. Therefore, even when the leg portion of the occupant is located at any position above or below, or on a right or left side of the occupant leg-facing portion 22, the leg portion can be received by the airbag 12C.

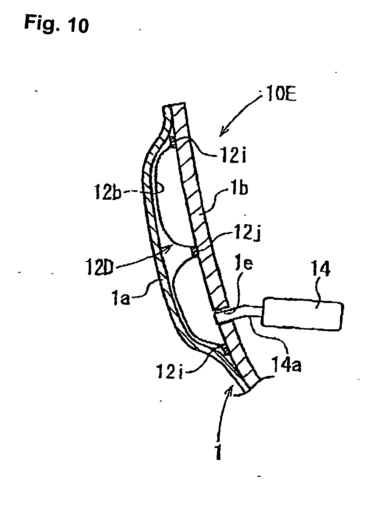

According to the present invention, an airbag arranged between an outer layer and a base member of the instrument panel may be connected to the base member. In this case, a surface (outer shell) opposite to an occupant-facing surface of the airbag may be composed of the base member, just like an occupant leg protection apparatus 10E of Fig. 10, which is not an embodiment of the invention. Fig. 10 is a vertical sectional view showing the occupant leg protection apparatus having the above structure in a state that the airbag is inflated.

In the occupant leg protection apparatus 10E of Fig. 10, the outer shell of the airbag 12D arranged between the outer layer 1a and the base member 1b of the instrument panel 1 is composed of a front panel 12b forming an occupant-facing surface and an area of the base member 1b behind the front panel 12b. That is, the peripheral edge of the front panel 12b is air-tightly connected to the base member 1b all around the periphery. By supplying gas between the front panel 12b and the base member 1b, the front panel 12b bulges out toward an occupant. Numeral 12i designates an adhesive layer connecting the peripheral edge of the front panel 12b to the base member 1b. In this apparatus, the front panel 12b is further connected locally to the base member 1b at an inner position than the periphery thereof, thereby limiting the bulging amount of the front panel 12b toward the occupant.

In this apparatus, the base member 1b is provided with an opening 1e communicating with the space between the front panel 12b and the base member 1b. A gas exhaust nozzle 14a of a gas generator 14 is connected to the opening 1e.

In this apparatus, the outer layer 1a of the instrument panel is a flexible member which can flexibly curve around the front panel 12b and extend in the vertical direction and lateral direction according to the bulging of the front panel 12b.

Similar to Figs. 1(a), 1(b) and Fig. 2, though the front panel 12b of the airbag 12D and the outer layer 1a of the instrument panel 1 are illustrated as separated from each other in Fig. 10 for the purpose of clearing up the relation of the respective components, the front panel 12b and the outer layer 1a are in close contact with each other.

The other structure of the occupant leg protection apparatus 10E is the same as that of the occupant leg protection apparatus 10 shown in Figs. 1(a), 1(b) and Fig. 2. The same numerals used in Fig. 10 designate the same parts as those in Figs. 1(a), 1(b) and Fig. 2.

In the occupant leg protection apparatus 10E having the aforementioned structure, in the event of an emergency such as a vehicle frontal collision, the gas generator 14 is actuated to spout out gas so that the gas is supplied between the front panel 12b and the base member 1b, whereby the front panel 12b bulges out to push the outer layer 1a of the instrument panel 1 toward the occupant. As the leg portions of the occupant move forward, the leg portions collide with the outer layer 1a and the airbag 12D receives the leg portions via the outer layer 1a, thereby absorbing impact. Also in this occupant leg protection apparatus 10E, since the outer layer 1a is enough flexible, stress generated at a portion of the legs of the occupant which collides with the outer layer 1a is enough small.

In the occupant leg protection apparatus 10E, the airbag 12D is substantially made up only by attaching the peripheral edge of the front panel 12b to the base member 1b with the adhesive layer 12i. Therefore, the assembling operation is quite simple.

The above-mentioned embodiments are all just examples of the present invention. It should be understood that the present invention include embodiments other than illustrative embodiments.

Though any of the above-mentioned embodiments is an example that the present invention is adopted to an occupant leg protection apparatus for an occupant sitting in a driver's seat, the present invention may be adopted to an occupant leg protection apparatus for an occupant sitting in another seat.

As described above, the present invention provides an occupant leg protection apparatus which can significantly reduce stress locally generated at a portion of legs of an occupant.

## Claims

1. An occupant leg protection apparatus comprising an instrument panel (1), an airbag (12; 12A; 12B) arranged in front of a vehicle seat and a gas generator (14) for inflating the airbag (12; 12A; 12B), wherein
the instrument panel (1) in front of the vehicle seat has an outer layer (1a) which is movable toward an occupant and a base member (1b) behind the outer layer (1a), and
said airbag (12; 12A; 12B) is disposed between the outer layer (1a) and the base member (1b) so that the outer layer (1a) is forced by the airbag (12; 12A; 12B) so as to move toward the occupant when the airbag (12; 12A; 12B) is inflated, **characterized in that** a front panel (12b) and a rear panel (12c) of the airbag (12; 12A; 12B) are partially connected together at an internal position by a seam (12e).

2. An occupant leg protection apparatus as claimed in claim 1, wherein the outer layer (1a) is connected to the airbag (12B) and the outer layer (1a) is so flexible to curve around an occupant-facing surface of the airbag (12B) when the airbag (12B) is inflated.

3. An occupant leg protection apparatus as claimed in claim 1 or 2, wherein the apparatus (10; 10A; 10B) has a limiting means (12e) for limiting the bulging amount of the airbag (12; 12A; 12B) toward the occupant.

4. An occupant leg protection apparatus as claimed in any one of claims 1 through 3, wherein the outer layer (1a) is able to be divided into a plurality of pieces when the airbag (12B) is inflated.

5. An occupant leg protection apparatus as claimed in any one of claims 1 through 4, wherein the base member (1b) is provided with at least one concavity (18) formed in the front surface thereof so that the airbag (12A) is partially accommodated in said at least one concavity (18).

6. An occupant leg protection apparatus as claimed in any one of claims 1 through 5, wherein the outer layer (1a) separates from the base member (1b) when the airbag (12B) is inflated.

7. An occupant leg protection apparatus as claimed in claim 6, wherein the airbag bulges out at least to protrude upwardly from the upper edge of the outer layer (1a) when the airbag is inflated.

## Patentansprüche

1. Insassenbeinschutzvorrichtung umfassend ein Armaturenbrett (1), einen Airbag (12; 12A; 12B), welcher vor einem Fahrzeugsitz angeordnet ist, und einen Gasgenerator (14) zum Aufblasen des Airbags (12; 12A, 12B),
wobei das Armaturenbrett (1) vor dem Fahrzeugsitz eine äußere Schicht (1a), welche zu einem Insassen hin bewegbar ist, und ein Basisteil (1 b) hinter der äußeren Schicht (1a) aufweist, und
wobei sich der Airbag (12; 12A; 12B) zwischen der äußeren Schicht (1a) und dem Basisteil (1b) befindet, so dass die äußere Schicht (1a) durch den Airbag (12; 12A; 12B) gedrängt wird, sich zu dem Insassen hin zu bewegen, wenn der Airbag (12; 12A; 12B) aufgeblasen wird, **dadurch gekennzeichnet, dass** eine vordere Stoffbahn (12b) und eine hintere Stoffbahn (12c) des Airbags (12; 12A, 12B) durch eine Naht (12e) an einer inneren Position teilweise zusammen verbunden sind.

2. Insassenbeinschutzvorrichtung nach Anspruch 1, wobei die äußere Schicht (1a) mit dem Airbag (12B) verbunden ist und die äußere Schicht (1a) so flexibel ist, dass sie sich um eine dem Insassen gegenüberliegende Oberfläche des Airbags (12B) biegt, wenn der Airbag (12B) aufgeblasen wird.

3. Insassenbeinschutzvorrichtung nach Anspruch 1 oder 2, wobei die Vorrichtung (10; 10A; 10B) Beschränkungsmittel (12e) aufweist, um den Umfang eines Ausbauchens des Airbags (12; 12A; 12B) zu dem Insassen hin zu beschränken.

4. Insassenbeinschutzvorrichtung nach einem der Ansprüche 1 bis 3, wobei die äußere Schicht (1a) in der Lage ist, in eine Mehrzahl von Stücke geteilt zu werden, wenn der Airbag (12B) aufgeblasen wird.

5. Insassenbeinschutzvorrichtung nach einem der Ansprüche 1 bis 4, wobei das Basisteil (1b) mit mindestens einer Konkavität (18) versehen ist, welche in der vorderen Oberfläche davon ausgebildet ist, so dass der Airbag (12A) teilweise in der mindestens einen Konkavität (18) aufgenommen ist.

6. Insassenbeinschutzvorrichtung nach einem der Ansprüche 1 bis 5, wobei sich die äußere Schicht (1a) von dem Basisteil (1b) trennt, wenn der Airbag (12B) aufgeblasen wird.

7. Insassenbeinschutzvorrichtung nach Anspruch 6, wobei sich der Airbag nach außen wölbt, um zumindest von der oberen Kante der äußeren Schicht (1a) nach oben hervorzuragen, wenn der Airbag aufgeblasen wird.

## Revendications

1. Dispositif de protection des jambes d'un occupant comprenant un panneau de tableau de bord (1), un airbag ou coussin gonflable (12 ; 12A ; 12B) disposé à l'avant d'un siège de véhicule et un générateur de gaz (14) permettant de gonfler l'airbag (12 ; 12A ; 12B), dans lequel:
- le panneau de tableau de bord (1) se trouvant à l'avant du siège de véhicule comporte une couche extérieure (1a), mobile en direction d'un occupant, et un élément de base (1b) situé derrière la couche extérieure (1a)
- et ledit airbag (12 ; 12A ; 12B) est disposé entre la couche extérieure (1a) et l'élément de base (1b), afin que la couche extérieure (1a) soit poussée en force par l'airbag (12 ; 12A ; 12B) afin de se déplacer vers l'occupant quand l'airbag (12 ; 12A ; 12B) est gonflé, **caractérisé en ce qu'**un panneau avant (12b) et un panneau arrière (12c) de l'airbag (12 ; 12A ; 12B) sont reliés en partie l'un avec l'autre au niveau d'une position interne par une jointure (12e)

2. Dispositif de protection des jambes d'un occupant selon la revendication 1, dans lequel la couche extérieure (1a) est reliée à l'airbag (12B) et la couche extérieure (1a) est suffisamment souple pour s'incurver autour d'une surface de l'airbag (12B) faisant face à l'occupant quand l'airbag est gonflé (12B).

3. Dispositif de protection des jambes d'un occupant selon la revendication 1 ou 2, dans lequel le dispositif (10 ; 10A ; 10B) comprend un moyen de limitation (12e) permettant de limiter l'ampleur du gonflement de l'airbag (12 ; 12A ; 12B) en direction de l'occupant.

4. Dispositif de protection des jambes d'un occupant selon l'une quelconque des revendications 1 à 3, dans lequel la couche extérieure (1a) est susceptible d'être divisée en une pluralité de pièces quand l'airbag est gonflé (12B).

5. Dispositif de protection des jambes d'un occupant selon l'une quelconque des revendications 1 à 4, dans lequel l'élément de base (1b) comporte au moins une concavité (18) formée dans sa surface avant, afin que l'airbag (12A) soit en partie logé dans ladite au moins une concavité (18).

6. Dispositif de protection des jambes d'un occupant selon l'une quelconque des revendications 1 à 5, dans lequel la couche externe (1a) se sépare de l'élément de base (1b) quand l'airbag est gonflé (12B).

7. Dispositif de protection des jambes d'un occupant selon la revendication 6, dans lequel l'airbag présente un bombement vers l'extérieur au moins pour faire saillie vers le haut à partir du bord supérieur de la couche externe (1a) quand l'airbag est gonflé.
